Europäisches Patentamt

European Patent Office

Office européen des brevets

(11) Veröffentlichungsnummer : **0 176 093**
**B1**

(12) **EUROPÄISCHE PATENTSCHRIFT**

(45) Veröffentlichungstag der Patentschrift :
03.01.90

(51) Int. Cl.⁵ : **H 04 N 11/00, H 04 N 9/79**

(21) Anmeldenummer : 85112160.8

(22) Anmeldetag : 25.09.85

(54) Farbfernsehübertragungssystem mit Übertragung von Luminanzsignalen und tiefpassgefilterten Chrominanzsignalen.

(30) Priorität : 25.09.84 DE 3435122
04.05.85 DE 3516110

(43) Veröffentlichungstag der Anmeldung :
02.04.86 Patentblatt 86/14

(45) Bekanntmachung des Hinweises auf die Patenterteilung : 03.01.90 Patentblatt 90/01

(84) Benannte Vertragsstaaten :
AT BE CH DE FR GB IT LI LU NL SE

(56) Entgegenhaltungen :
CH–A– 317 721
DE–B– 1 246 020
DE–B– 1 279 723
US–A– 2 903 506
US–A– 4 370 673

(73) Patentinhaber : TELEFUNKEN Fernseh und Rundfunk GmbH
Göttinger Chaussee 76
D-3000 Hannover 91 (DE)

(72) Erfinder : Dickopp, Gerhard, Prof. Dr.
Zu den Tannen 19
D-4150 Krefeld (DE)
Erfinder : Vuong, The Ahn, Dipl.-Ing.
Priessnitzweg 3
D-7000 Stuttgart 50 (DE)
Erfinder : Hartmann, Siegfried, Dipl.-Ing.
Oberhauserstrasse 105
D-4300 Essen 11 (DE)
Erfinder : Bruck, Guido, Dipl.-Ing.
Formerstrasse 24
D-4030 Ratlingen 1 (DE)

(74) Vertreter : Einsel, Robert, Dipl.-Ing.
E W D Electronic-Werke Deutschland GmbH Patent- und Lizenzabteilung Göttinger Chaussee 76
D-3000 Hannover 91 (DE)

## Beschreibung

Die Erfindung betrifft ein Farbfernsehübertragungssystem nach dem Oberbegriff des Patentanspruchs 1.

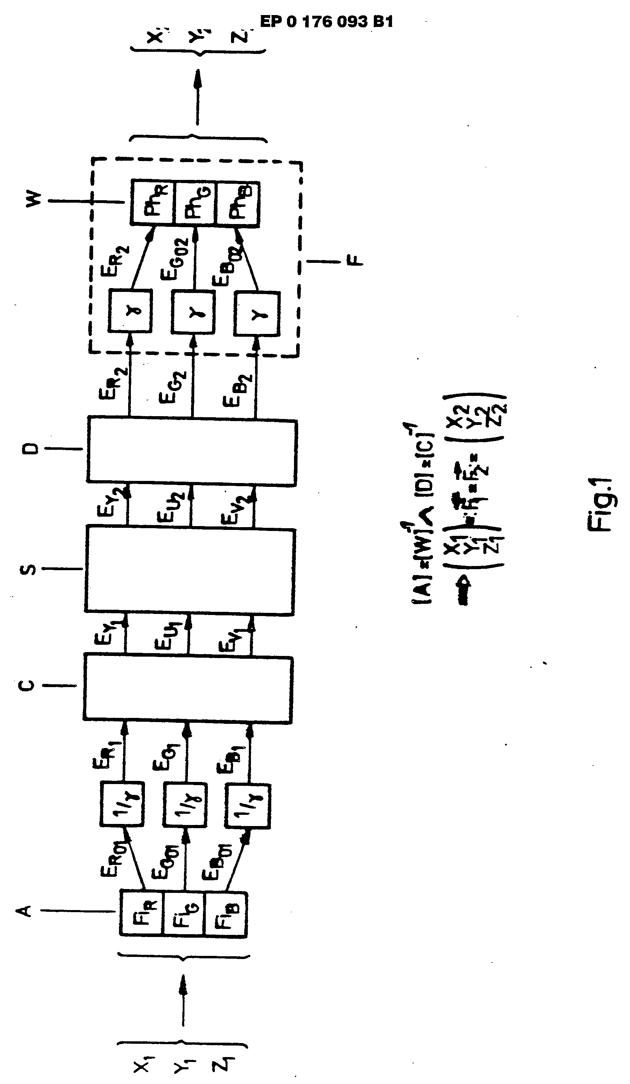

Bei den standardisierten Farbfernsehsystemen wird auf der Bildaufnahmeseite mit der Umsetzung der Farbwerte in Farbwertsignale eine nichtlineare Verzerrung vorgenommen. Diese Verzerrung soll die bei den gebräuchlichen Kathodenstrahl-Wiedergaberöhren bestehende Nichtlinearität, die zu einer Gradationsverzerrung (Gammaverzerrung) führt, « vorentzerren ». Das Prinzip eines solchen bekannten Gesamtsystems ist in Fig. 1 dargestellt.

Die Farbvalenz eines aufzunehmenden Bildelementes ist durch Normfarbwerte $X_1$, $Y_1$ und $Z_1$ repräsentiert. Die Aufnahme-Kamera A (mit Filtern $Fi_R$, $Fi_G$, $Fi_B$) wandelt die aufgenommene Strahlung linear in die primären, hier als dimensionslos angenommenen Farbwertsignale $E_{R01}$; $E_{G01}$ und $E_{B01}$ um. Diese werden entsprechend den Beziehungen

$$E_{R1} = E_{R01}^{1/y}; \quad E_{G1} = E_{G01}^{1/y}, \quad E_{B1} = E_{B01}^{1/y} \tag{1}$$

vorverzerrt. Dabei gilt

$$E_{R01}, E_{G01}, E_{B01}, E_{R1}, E_{G1}, E_{B1} \in [0 ; 1] \tag{2}$$

Die vorverzerrten Farbwertsignale $E_{R1}$, $E_{R2}$, $E_{R3}$ werden mit Hilfe der Codermatrix C linear umgesetzt in ein sogenanntes Luminanzsignal $E_{Y1}$ und die Chrominanzsignale $E_{U1}$ und $E_{V1}$. Diese Signale werden im weiteren Verlauf (S) für die Übertragung aufbereitet, übertragen und rückgeformt und stehen auf der Wiedergabeseite als $E_{Y2}$, $E_{U2}$ und $E_{V2}$ wieder zur Verfügung. Über die Decodermatrix D werden hieraus die Farbwertsignale $E_{R2}$, $E_{G2}$ und $E_{B2}$ zur Ansteuerung der Farbbildröhre F gewonnen. Im standardisierten System sind die Kamera-Farbfilter $Fi_R$, $Fi_G$, $Fi_B$ auf die Wiedergabe-Leuchtstoffe W (« Phosphore » $Ph_R$, $Ph_G$, $Ph_B$) der Farbbildröhre F abgestimmt. Außerdem sind die Coder- und die Decodermatrix C bzw. D zueinander invers. Bleiben bei der Signalaufbereitung, Übertragung und Rückformung das Luminanz- und die Chrominanzsignale unverändert, so stimmen die Wiedergabe-Normfarbwerte $X_2$, $Y_2$ und $Z_2$ mit den Originalwerten $X_1$, $Y_1$ und $Z_1$ überein. Erfahren die übertragenen Luminanz- oder Chrominanzsignale eine Veränderung, so ist diese Übereinstimmung gestört.

Durch Veränderung der Chrominanzsignale entstehen Wiedergabedefekte. Dies entspricht der bekannten Tatsache, daß bei der Unbuntwiedergabe eines Buntbildes eine Luminanzreduktion eintritt. Diese Reduktion ist besonders ausgeprägt bei hohen Farbsättigungen und bei solchen Farben, die ohnehin schon eine niedrige Luminanz haben, z. B. bei der Farbe Blau.

Der Erfindung liegt die Aufgabe zugrunde, diese Luminanzreduktion zu vermeiden oder zu verringern.

Diese Aufgabe wird durch die im Anspruch 1 gekennzeichnete Erfindung gelöst. Weiterbildungen der Erfindung sind in den abhängigen Patentansprüchen beschrieben.

Zur näheren Erläuterung der Erfindung wird die Problematik anhand der Zeichnungen beispielsweise beschrieben. Die Zeichnungen zeigen in

Fig. 1 die Prinzipanordnung eines Farbfernsehsystems,
Fig. 2-4 Diagramme,
Fig. 5, 6 Abwandlungen der Fig. 1 gemäß der Erfindung,
Fig. 7 einen Grundbaustein,
Fig. 8 die Erzeugung einer Chrominanzkomponente $E_{W1,2}$,
Fig. 9 die Bestimmung des Korrektursignals, $\Delta E_y$ mit Hilfe einer Näherungslösung-Schätzwert,
Fig. 10 eine Näherungslösung erster Ordnung,
Fig. 11 eine Näherungslösung zweiter Ordnung,
Fig. 12 einen Pipe-Line-Grundbaustein,
Fig. 13 eine iterative Lösung nach dem Wäge-Verfahren,
Fig. 14 ein System zur Speicherung von Farbfernsehsignalen und
Fig. 15 eine Verwirklichung der Erfindung bei einer Anordnung zur Speicherung von Farbfernsehsignalen.

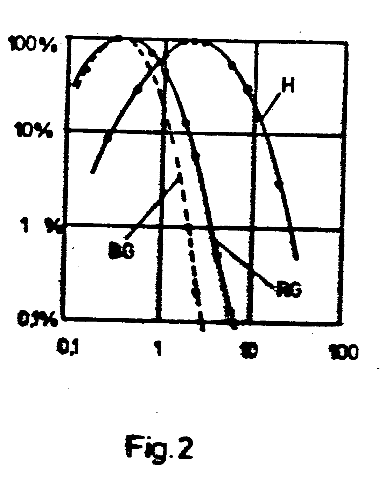

Die bei der Standardisierung der Farbfernsehsysteme eingeführte Umformung der Rot-, Grün- und Blau-Farbwertsignale $E_{R1}$, $E_{G1}$ und $E_{B1}$ in das Luminanzsignal $E_{Y1}$ und die beiden Chrominanzsignale $E_{U1}$ und $E_{V1}$ hatte neben Gründen der Kompatibilität mit den schon bestehenden Schwarz-Weiß-Fernsehsystemen das Ziel der Zerlegung der Gesamtstrahlung in einen Anteil, der im wesentlichen die Leuchtdichte oder Luminanz vermittelt, und in weitere Anteile, die im wesentlichen die Buntheit oder Chrominanz vermitteln. Die Zerlegung einer Strahlung in Luminanz und Chrominanz ist motiviert durch eine Eigenschaft des menschlichen Gesichtssinns, die in Fig. 2 bezüglich der Kontrastempfindlichkeit für farbartund leuchtdichtemodulierte Gitter angedeutet ist; auf der Abszisse ist die Raumfrequenz in Linienpaaren/Grad abgetragen, auf der Ordinate die relative Kontrastempfindlichkeit in Prozenten (vgl. z. B. H. Lang, Farbmetrik und Farbfernsehen, München und Wien 1978, Seite 322). Die Kurven BG, RG und H zeigen den Verlauf der relativen Kontrastempfindlichkeit für die Linienpaare Blau-Gelb (BG), Rot-Grün (RG) bzw. für Helligkeit (H). Danach beträgt das Auflösungsvermögen des menschlichen Gesichtssinns für Farbunterschiede nur 10 % bis 20 % von dem der Helligkeitsunterschiede. Die Chrominanz kann daher mit gegenüber der Luminanz verringerter Bandbreite reproduziert werden. Dies ist der Grund für die standardisierten Bandbreitenreduktionen der Chrominanzsignale. Infolge der Signalverarbeitung in der Ebene der gammavorverzerten Signale führt die Bandbreitenreduktion der Chrominanzsignale auch zu einer Beeinflussung der Wiedergabeluminanz. Die Wiedergabeluminanz ist proportional dem Farbwert $Y_2$. $Y_2$ wird deswegen auch als relative Luminanz bezeichnet. $Y_2$ setzt sich aus den Farbwerten $R_2$, $G_2$ und $B_2$ zusammen nach der Beziehung:

$$Y_2 = b_R R_2 + b_G G_2 + b_B B_2 \quad \text{mit} \quad Y_2, R_2, G_2, B_2 \in [0\,;1] \tag{3}$$

Die Beiwerte $b_R$, $b_G$, $b_B$ hängen von den standardisierten Wiedergabefarbvalenzen ab. Für sie gilt

$$\text{im} \begin{cases} \text{FCC} - \text{Standard} : b_R = 0{,}299\,; & b_G = 0{,}587\,; & b_B = 0{,}144 \\ \text{EBU} - \text{Standard} : b_R = 0{,}222\,; & b_G = 0{,}707\,; & b_B = 0{,}071 \end{cases}$$

In beiden Standards gilt:

$$b_R + b_G + b_B = 1 \tag{4}$$

In (3) entsprechender Weise wird das Luminanzsignal aus den Farbwertsignalen gebildet, z. B.

$$E_{Y2} = a_R E_{R2} + a_G E_{G2} + a_B E_{B2} \quad \text{mit} \quad E_{R2}, E_{G2}, E_{B2} \in [0\,;1] \tag{5}$$

Im FCC-Standard wurden die Beiwerte für die Farbwertsignale denen für die Farbwerte gleichgesetzt, d.h.

$$a_R = b_R, \quad a_G = b_G, \quad a_B = b_B \tag{6}$$

Für den EBU-Standard wurden die Farbwertsignalbeiwerte aus dem FCC-Standard übernommen. Die Beziehungen (6) sind im EBU-Standard nur noch näherungsweise gültig. Da ihre Gültigkeit die Auswirkungen von Veränderungen der Chrominanzsignale besser erkennbar macht, soll sie für die weiteren Betrachtungen unterstellt werden. Als Chrominanzsignale werden im folgenden die sogenannten Farbdifferenzsignale verwendet

$$E_{B2} - E_{Y2} = E'_U\,; \quad E_{R2} - E_{Y2} = E'_V\,; \quad E_{G2} - E_{Y2} = E'_W \tag{7}$$

Von den Gleichungen (7) sind zwei linear unabhängig. Im übrigen gilt

$$a_B * E'_U + a_R * E'_V + a_G * E'_W = 0 \tag{8}$$

Die gestrichenen Größen in (7) und (8) sind den entsprechenden nicht gestrichenen Größen in Fig. 1 proportional. Sie unterscheiden sich von ihnen durch die Beiwerte für die Farbdifferenzsignale. Mit (5), (6), (7) und (8) und bei Berücksichtigung des nichtlinearen Zusammenhangs zwischen den Farbwert-Ansteuersignalen und den Farbwerten selbst entsprechend Fig. 1 läßt sich (3) schreiben in der Form

$$Y_2 = a_B(E_{Y2} + E'_U)^y + a_R(E_{Y2} + E'_V)^y + a_G(E_{Y2} + E'_W)^y \tag{9}$$

Die Nichtlinearität heutiger Farbempfängerröhren ist durch y-Werte zwischen 2,2 und 2,8 gekennzeichnet. Sie wird durch einen mittleren Wert von y = 2,5 für die meisten Röhren hinreichend genau angenähert. Dieser Wert wird daher für die spätere quantitative Auswertung zugrundegelegt.

Gleichung (9) kann unmittelbar entnommen werden, daß nur dann die Luminanz ausschließlich durch $E_{Y2}$ vermittelt wird, wenn der Trivial-Fall $E'_{U2} = E'_{V2} = E'_{W2} = 0$, also eine Unbuntübertragung vorliegt, oder wenn y = 1 ist. Es läßt sich zeigen, daß für y $\neq$ 1 die Luminanz des Bundbildes gegenüber dem Unbuntbild verkleinert würde. Den heutigen Fernsehstandards liegen y-Werte zugrunde, die größer sind als 1 ; sie führen zu einer Erhöhung der Wiedergabeluminanz durch endliche Chrominanzsignalwerte. Dieser Tatbestand läßt sich auch so interpretieren, daß ein Teil der Wiedergabeluminanz über den Chrominanzkanal übertragen wird.

Im Fall einer Tiefpaßfilterung werden die Farbwert-Ansteuersignale

$$E_{R2} = E'_{V2L} + E_{Y2} = E_{R2L} + E_{Y2H}$$

$$E_{G2} = E'_{W2L} + E_{Y2} = E_{G2L} + E_{Y2H} \tag{10}$$

$$E_{B2} = E'_{U2L} + E_{Y2} = E_{B2L} + E_{Y2H}$$

In (10) sind die tiefpaßgefilterten Anteile mit dem Index L (« low ») versehen; die Differenzen zwischen den ursprünglichen, und den entsprechenden tiefpaßgefilterten Signalen haben den Index H (« high »). Wie den rechten Seiten der Gleichung (10) zu entnehmen ist, erfolgt eine korrekte Ansteuerung der Wiedergabeeinheit nur bezüglich der tiefpaßgefilterten Anteile, die « Höhen » sind durch $E_{Y2H}$ bei endlicher Chrominanz unterrepräsentiert. Dies kann bei hohen Farbbildsättigungen zu beträchtlichen Luminanzverfälschungen führen.

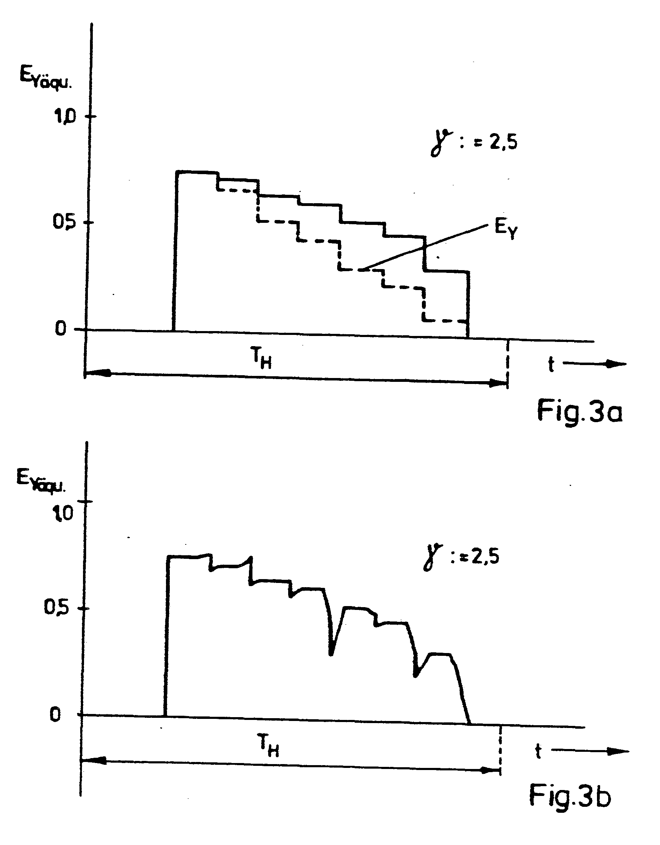

Fig. 3a und 3b zeigen in einer Prinzipdarstellung in Gegenüberstellung das äquivalente Luminanzsignal einer Zeile für das Standard-Farbbalkentestbild ohne und mit Chrominanzsignalfilterung. Das äquivalente Luminanzsignal ist mit der relativen Wiedergabe-Luminanz verknüpft über die Beziehung

$$E_{Y2äqu.} = Y_2^{1/y} \tag{11}$$

Die Luminanzdefekte-Kompensation besteht nach einer Erkenntnis der Erfindung nur in den « Höhen ». Sie lassen sich also durch Signalhöhenanteile ausgleichen, die bei Kompatibilitätsforderung nur im Luminanzsignalkanal übertragen werden können. Die entsprechende additive Komponente $\Delta E_Y$ wird allen drei Ansteuersignalen nach (10) überlagert. $\Delta E_Y$ läßt sich durch Gleichsetzung der entsprechenden mit der relativen Soll-Luminanz ermitteln entsprechend der Beziehung

$$Y_{Soll} = a_B(E'_{U2L} + E_{Y2} + \Delta E_Y)^y + a_R(E'_{V2L} + E_{Y2} + \Delta E_Y)^y + a_G(E'_{W2L} + E_{Y2} + \Delta E_y)^y \tag{12}$$

mit y = Gamma.

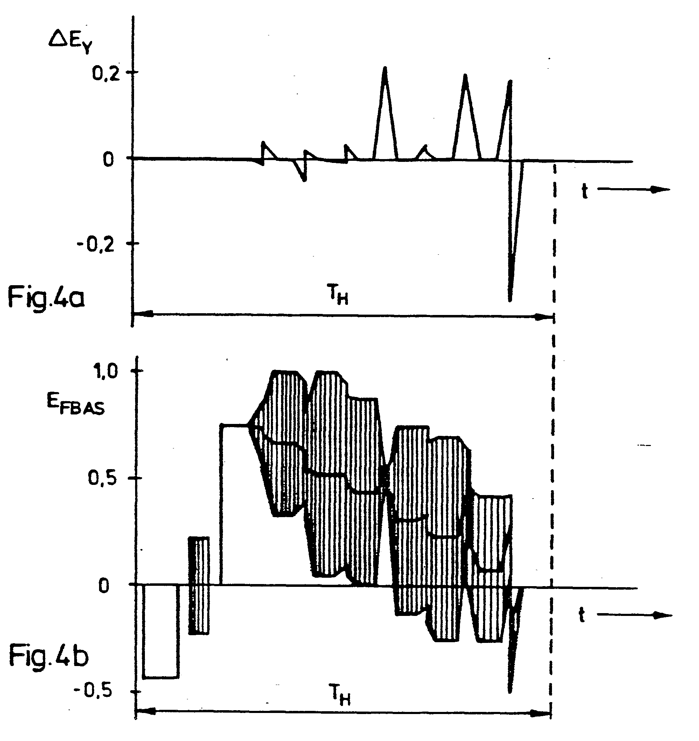

Gl. 12 kann in unterschiedlicher Form ausgewertet werden. Es zeigte sich, daß bei geeigneter Schätzung eines Ausgangswertes eine Reihenentwicklung mit Abbruch nach dem linearen Glied schon eine brauchbare Näherungslösung liefert. Für das schon erwähnte Standard-Farbbalken-Testbild gibt Fig. 4a den Prinzipverlauf des Kompensationssignals über eine Zeilenperiode an. Fig. 4b zeigt das gesamte, durch $E_Y$ modifizierte NTSC- bzw. PAL-FBAS-Signal. Es zeigt, daß die Gesamt-Signalgrenzen gegenüber dem nichtkompensierten Fall nur im Bereich des Schwarzsignals überschritten werden. Sieht man hier eine Begrenzung auf die Standardsignalhöhe vor, so ist das modifizierte Signal mit den bestehenden Fernseh-Standards kompatibel.

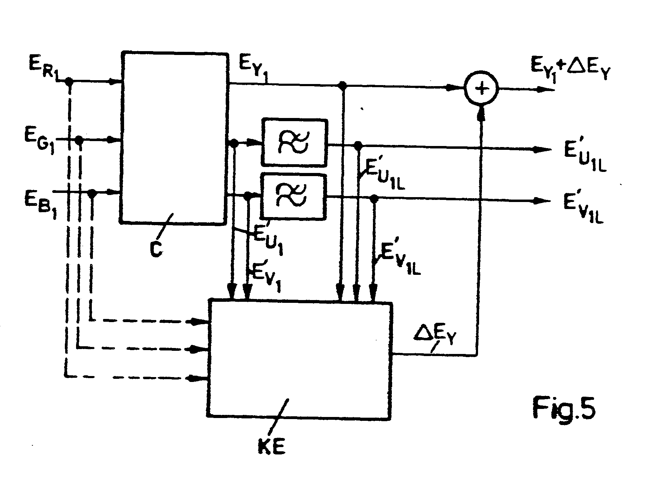

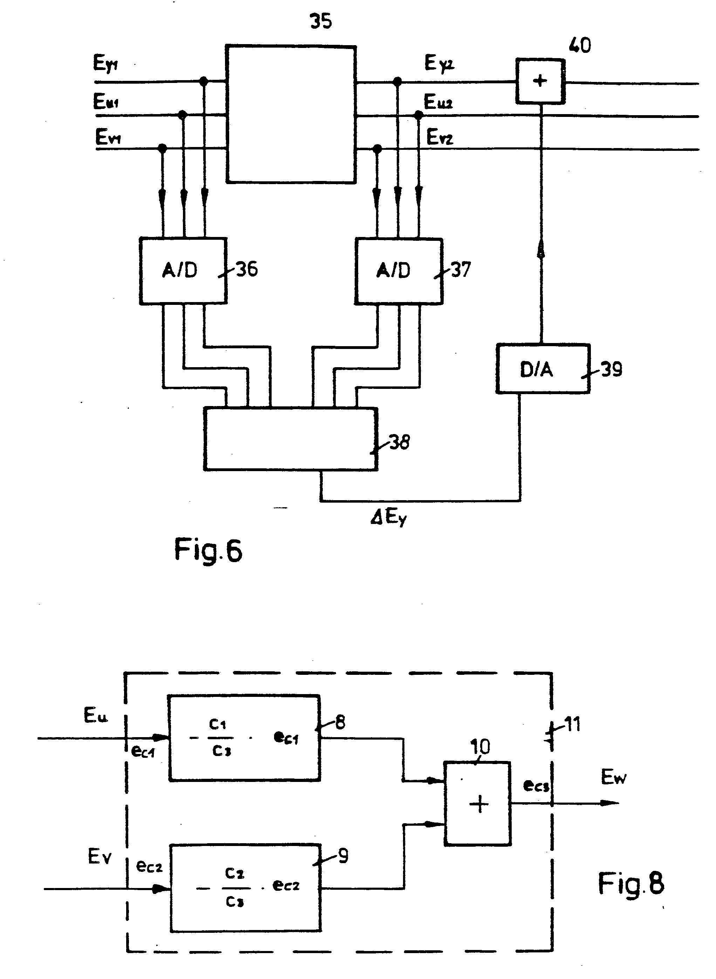

Fig. 5 und 6 zeigen Prinzipschaltungen eines Farbfernsehübertragungssystems zur Erzeugung und Nutzung des Korrektursignals zwecks Kompensation der Luminanzdefekte, bei denen in Ergänzung zu der in Fig. 1 dargestellten Schaltung eine Korrektursignal-Erzeugungsschaltung KE bzw. 36, 37, 38 und 39 vorgesehen ist. In diesen Schaltungen wird digital (z. B. in Form eines Rechners) oder analog gemäß Gleichung 12 das Korektursignal $\Delta E_Y$ erzeugt und in einer Additionsschaltung (« + » bzw. 40) dem Luminanzsignal zugefügt. Das Korrektursignal kann nur bei bekanntem « Soll-Zustand » gewonnen werden. Dieser ist nur auf der Aufnahmeseite bekannt.

Durch Korrektursignale, die im Luminanzkanal heute üblicher Bildübertragungssysteme übertragen werden, lassen sich Luminanzdefekte kompensieren, die durch Tiefpaßfilterung der Chrominanzsignale entstehen. Dadurch wird bezüglich der Wiedergabeluminanz Ähnliches erzielt wie durch eine Linearisierung des Bildaufnahme-/Übertragungs-/Wiedergabesystems in der Weise, daß die Gradationsvorentzerrung unmittelbar vor der Wiedergabe-Kathodenstrahlröhre vorgenommen wird. Das soweit beschriebene Vorkompensationsverfahren kann auch mit der heutigen standardisierten Signalaufbereitungs- und Übertragungstechnik kompatibel gestaltet werden.

In Fig. 5 und 6 werden der Korrektursignal-Erzeugungsschaltung entweder Signale $E'_{U1}$ und $E'_{V1}$ vom Ausgang der Coder-Matrix oder alternativ hierzu (Fig. 5) Signale $E_{R1}$, $E_{G1}$, $E_{B1}$ vom Eingang der Coder-Matrix zugeführt.

Die Gewinnung des Korrektursignals $\Delta E_Y$ erfolgt
a) Näherungslösung für y = 2 ... 3

Schätzwert:

$$E_{Ys} = E_{Y2äqu.soll} - E_{Y2äqu.ist} \tag{13}$$

Mit Hilfe von $\Delta E_{Ys}$ gewonnene lineare Näherung

$$\Delta E_{Y1} = \Delta E_{Ys} + \frac{Y_{soll} - Y(E_{Ys})}{y * (E_{Y2} + \Delta E_{Ys})^{y-1}} \tag{14}$$

4

Verbesserte Näherungslösung :

$$\Delta E_{Y2} = \Delta E_{Ys} + \frac{[Y_{soll} - Y(E_{ys})] * 2}{y * [E_{Y2} + \Delta E_{Ys} + (E_{Y2} + \Delta E_{Ys})^{y-1}]} \tag{15}$$

oder

$$\Delta E_Y^* = \Delta E_Y + \frac{[Y_{soll} - Y(E_{ys})] * 2}{y * [E_{Y2} + \Delta E_{Ys}]^{y/2}} \tag{16}$$

b) Z.B. iterativ aus Gl. 12

Wäge-Verfahren

Nach dem Prinzip des Wägeverfahrens bei der A/D-Umsetzung kann der gesuchte Wert $\Delta E_y$ in der Gleichung 12 bestimmt werden. Der Kompensationswert $\Delta E_y$ wird durch ein n-Bit-Wort in der Form von 2er-Komplement-Zahlen dargestellt. Die Einzelbits dieses Wortes werden iterativ geprüft.

Newton Verfahren

Der gesuchte Kompensationswert $\Delta E_y$ wird nach folgender Formel iterativ bestimmt.

$$\Delta E_y^{(i+1)} = \Delta E_y^{(i)} - \frac{f(\Delta E_y^{(i)})}{f'(\Delta E_y^{(i)})}$$

$\Delta E_y^{(i)}$ : Der $\Delta E_y$-Wert des i-ten Iterationsschrittes

$$f(\Delta E_y) = a_B(E_u + E_y + \Delta E_y)^y + a_R(E_u + E_y + \Delta E_y)^y + a_G(E_w + E_y + \Delta E_y)^y - Y_{soll}$$

$$f'(\Delta E_y) = \frac{df(\Delta E_y)}{d \Delta E_y}$$

Fig. 6 zeigt eine Einzelheit eines erfindungsgemäßen Farbfernsehübertragungssystems mit einem Rechenwerk zur Erzeugung eines Luminanzkorrektursignals $\Delta E_y$. Das Luminanzsignal $E_{y1}$ und die Chrominanzsignale $E_{u1,v1}$, die von einer Aufnahmekamera geliefert werden, werden einer Verarbeitungsstufe 35 zugeführt. Das Luminanzsignal $E_{y2}$ und die Chrominanzsignale $E_{u2,v2}$, die an den Ausgängen der Verarbeitungsstufe 35 anliegen, werden dem Sender zugeführt. Sowohl die Eingangssignale als auch die Ausgangssignale der Verarbeitungsstufe 35 werden A/D-Wandlern 36 bzw. 37 zugeführt. Die Ausgänge der A/D-Wandler 36, 37 führen auf ein Korrekturrechenwerk 38, dessen Ausgangssignal über einen D/A-Wandler 39 einem Addierer 40 zugeführt und dem Luminanzausgangssignal $E_{y2}$ der Verarbeitungsstufe 35 aufaddiert wird. Das Ausgangssignal des Korrekturrechenwerks 38 stellt ein Korrektursignal $\Delta E_y$ dar.

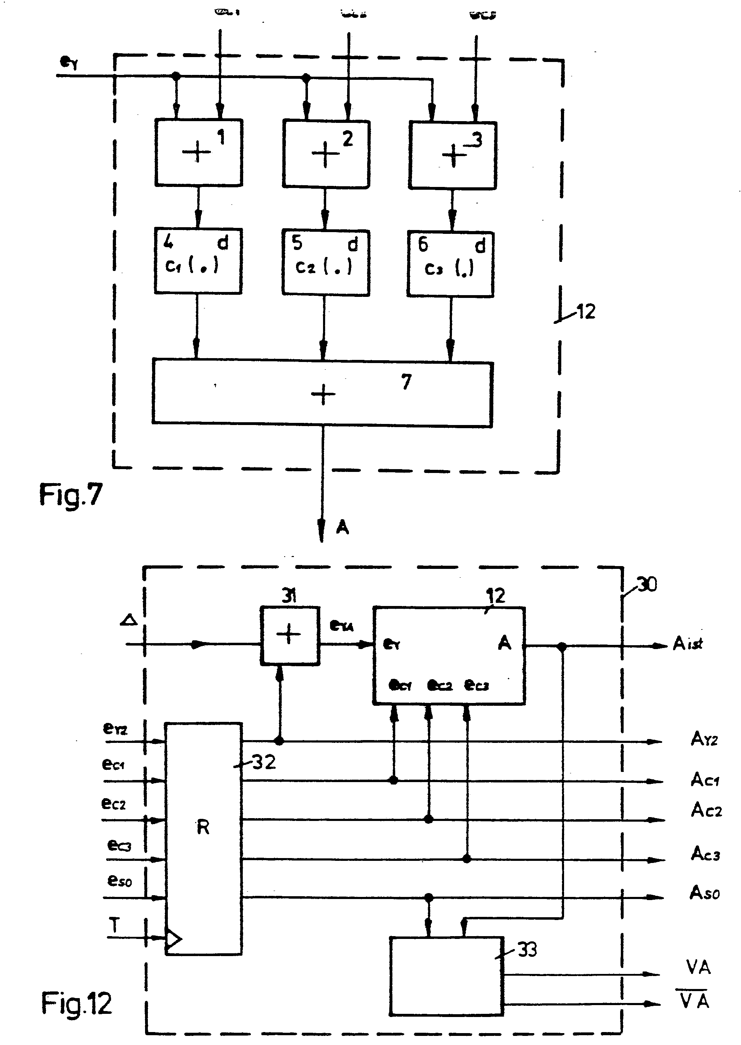

Fig. 7 zeigt einen Grundbaustein 12. Diesem Grungbaustein 12 werden vier Signale zugeführt, bei denen es sich um ein Luminanzsignal $e_y$ und drei Chrominanzsignale $e_{c1}$, $e_{c2}$, $e_{c3}$ handelt.

Mit Hilfe von Addierern 1, 2, 3 wird das Luminanzsignal $e_y$ mit je einem Chrominanzsignal $e_{c1}$, $e_{c2}$, $e_{c3}$ addiert. Die Ausgangssignale der Addierer 1, 2, 3 werden separat potenziert, gewichtet und addiert. Die Gewichtungsfaktoren der Potenzierschaltungen 4, 5, 6 können unterschiedlich sein, die Potenz entspricht vorzugsweise der Gammavorverzerrung γ. Die Potenzierung und Gewichtung der einzelnen Summen kann z. B. durch Lock-up-table geschehen. Eine weitere Möglichkeit ist die Verwendung eines digitalen Rechenwerkes. Der Addierer 7 liefert das Ausgangssignal des Grundbausteins 12.

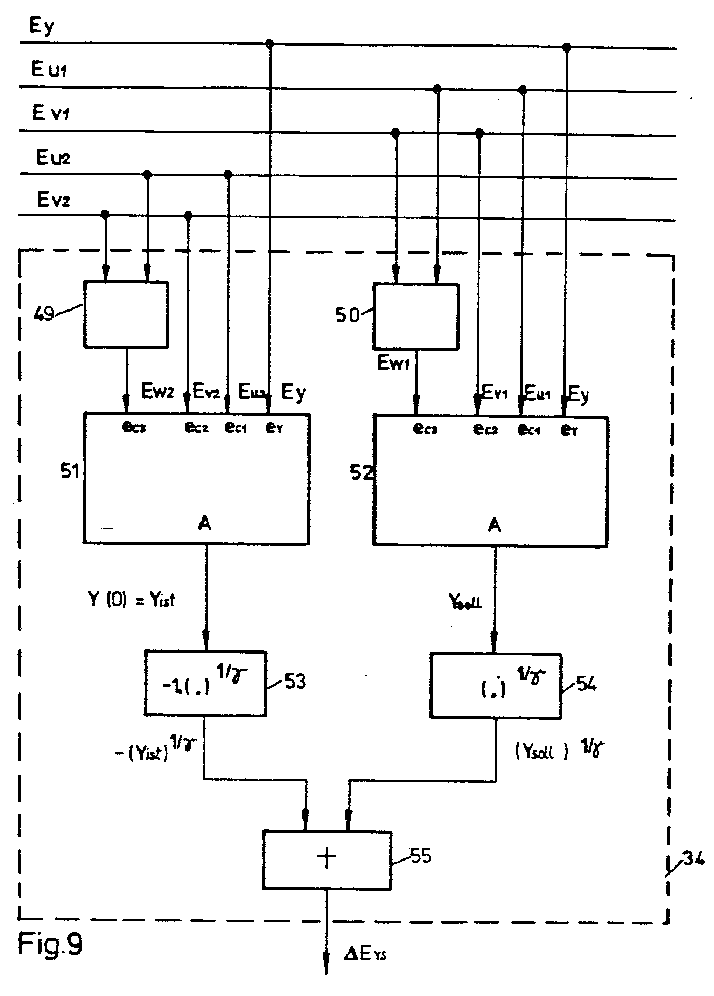

Fig. 8 zeigt eine Schaltungsanordnung zur Erzeugung einer zusammengesetzten Chrominanzkomponente $E_w = e_{c3}$. Die Chrominanzkomponenten $E_u = e_{c1}$, $E_v = e_{c2}$ werden je einer Gewichtungsstufe 8 bzw. 9 zugeführt, deren Ausgangssignale addiert die zusammengesetzte Chrominanzkomponente $E_w$ ergeben. Die Chrominanzkomponente $E_u$ wird mit -c1/c3 gewichtet, die Chrominanzkomponente $E_v$ wird mit -c2/c3 gewichtet. Für die EBU-Norm ergibt sich c1 = $b_B$, c2 = $b_R$ und c3 = $b_G$. Für die FCC-Norm ergibt sich c1 = $a_B$, c2 = $a_R$, c3 = $a_G$.

Fig. 9 zeigt eine Bestimmung eines Korrektursignals $\Delta E_{ys}$ mit Hilfe einer Näherungslösung nullter Ordnung, einem Schätzwertverfahren. Einem ersten Grundbaustein 52 wird das Luminanzsignal $E_y$, die vor der Verarbeitungsstufe 35 auftretender. Chrominanzkomponenten $E_{u1}$, $E_{v1}$, sowie eine aus diesen zusammengesetzte Chrominanzkomponente $E_{w1}$ zugeführt. Einem zweiten Grundbaustein 51 wird das Luminanzsignal $E_y$ und die nach der Verarbeitungsstufe 35 auftretenden Chrominanzkomponenten $E_{u2}$,

EP 0 176 093 B1

$E_{v2}$, sowie eine aus diesen beiden Chrominanzkomponenten zusammengesetzte Chrominanzkomponente $E_{w2}$ zugeführt. Am Ausgang des Grundbausteins 51 liegt das Luminanz-Ist-Signal $Y_{ist}$, am Ausgang des Grundbausteins 52 das Luminanz-Soll-Signal $Y_{soll}$ an. Das Luminanz-Ist-Signal $Y_{ist}$ wird invertiert und mit $1/\gamma$ potenziert. Das Luminanz-Soll-Signal $Y_{soll}$ wird mit $1/\gamma$ potenziert. Beide Signale addiert ergeben einen Luminanzkorrekturwert $\Delta E_{ys}$.

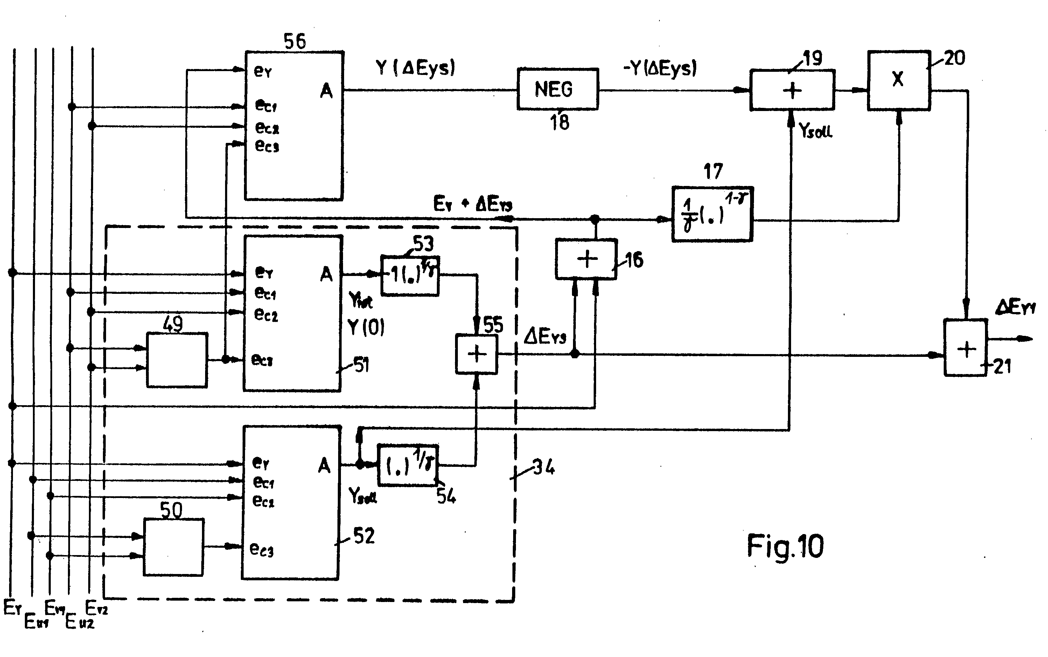

Fig. 10 zeigt eine Bestimmung eines Luminanzkorrektursignals $\Delta E_{y1}$ mit Hilfe einer Näherungslösung erster Ordnung. Der Baustein 34 entspricht Fig. 9. Das Luminanzsignal $E_y$ und das Korrektursignal $\Delta E_{ys}$ aus Fig. 9 werden einem Addierer 16 zugeführt. Die Summe $E_y + \Delta E_{ys}$ wird einem weiteren Grundbaustein 56 zugeführt. Weiter werden die Chrominanzkomponenten $E_{u2}$, $E_{v2}$ nach der Verarbeitungsstufe 35 und das aus ihnen zusammengesetzte Chrominanzsignal $E_{w2}$ dem Grundbaustein 56 zugeführt. Das Ausgangssignal $Y(\Delta E_{ys})$ des Grundbausteins 56 wird negiert und mit dem Ausgangssignal $Y_{soll}$ des Grundbausteins 52 einer Additionsstufe 19 zugeführt. Das Luminanzsignal $E_y + \Delta E_{ys}$ wird mit $1/\gamma$ gewichtet und mit $(1 - \gamma)$ potenziert. Dieses Signal wird einem Multiplizierer 20 zugeführt. Weiterhin wird das Ausgangssignal der Additionsstufe 19 dem Multiplizierer 20 zugeführt. Das Ausgangssignal des Multiplizierers 20 wird mit dem Luminanzkorrektursignal $\Delta E_{ys}$ addiert und es ergibt sich ein Luminanzkorrektursignal $\Delta E_{y1}$.

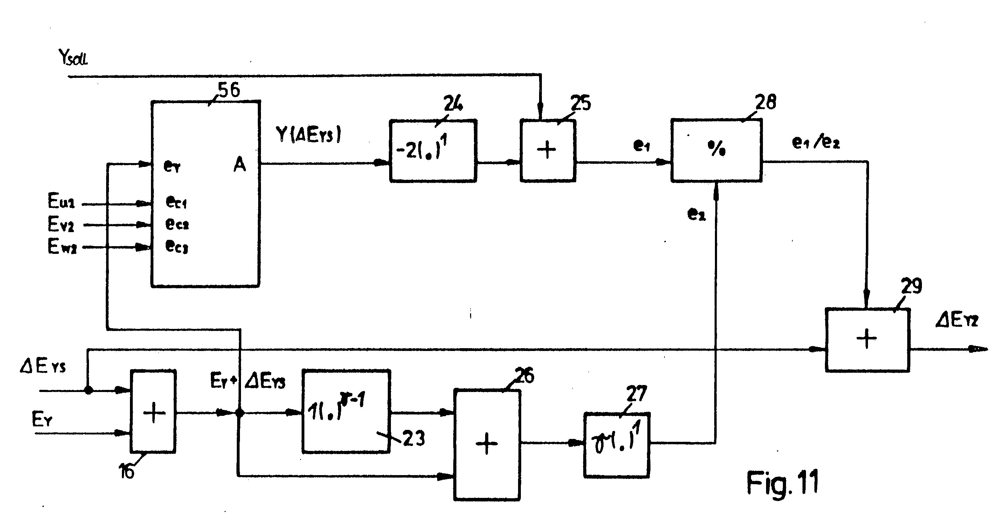

Fig. 11 zeigt eine Bestimmung eines Luminanzkorrektursignals $\Delta E_{y2}$ mit Hilfe einer Näherungslösung zweiter Ordnung. Die korrigierte Luminanzkomponente $E_y + \Delta E_{ys}$ des ersten Rechenwerks 34 wird mit $(\gamma - 1)$ potenziert und gewichtet, Potenzierer 23, und mit sich selbst addiert 26. Die Addition 26 wird danach mit der Gammavorverzerrung $\gamma$ gewichtet, 27, und mit der Addition 25 des gewichteten Ausgangssignals $Y(\Delta E_{ys})$ des dritten Grundbausteins 56 und des Luminanz-Sollwertes $Y_{soll}$ einem Divisor 28 zugeführt. Das Ausgangssignal e1/e2 des Divisors 28 wird addiert, 29, mit dem Ausgangssignal $\Delta E_{ys}$ des ersten Rechenwerks 34. Das Ergebnis ist ein Korrektursignal $\Delta E_{y2}$ eines dritten Rechenwerks.

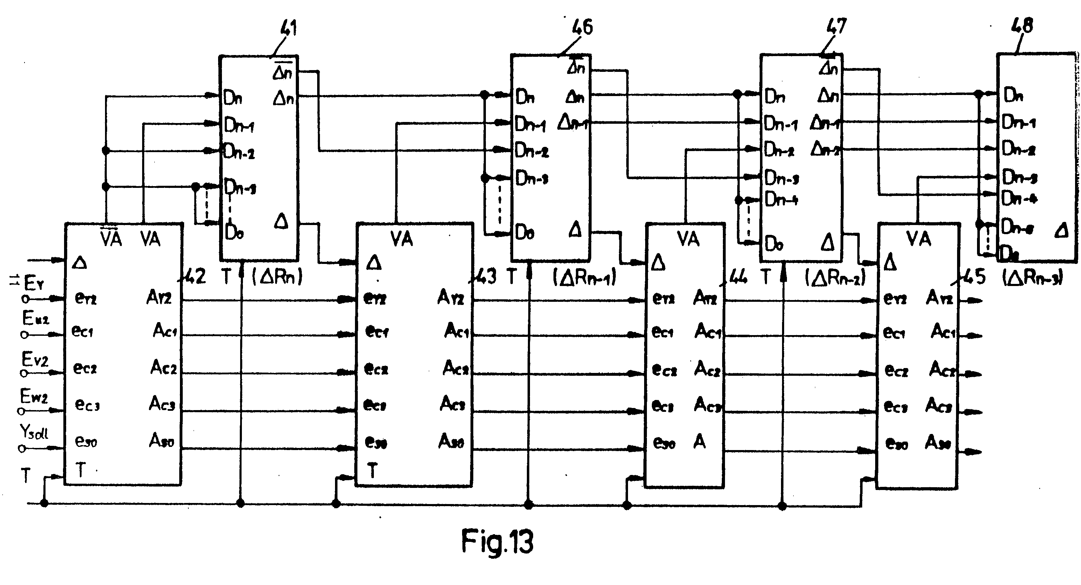

Fig. 12 zeigt den Aufbau eines Pipe-Line-Grundbausteins 30, wie er z. B. bei der iterativen Lösung nach dem Wäge-Verfahren Anwendung findet. Einem Register 32 werden das Luminanzsignal $e_{y2}$, die Chrominanzkomponenten $e_{c1,c2,c3}$, eine Luminanzkomponente $e_{so}$ einer vorherigen Verarbeitungsstufe und ein Takt T zugeführt. Mit dem Takt T wird das Register 32 geladen und die durch den vorangehenden Takt T geladenen Information ausgelesen.

Es wird die Information also um einen Takt T verzögert. Die Ausgänge des Registers 32 entsprechen demnach den Eingängen des Registers 32. Das Luminanzsignal $e_{y2}$ wird einem Addierer 31 zugeführt, an dessen zweitem Eingang ein iterativer Korrekturwert $\Delta$ anliegt. Der Ausgang des Addierers 31 führt auf den Luminanzeingang $e_y$ eines Grundbausteins 12. Die Chrominanzeingänge $e_{c1,c2,c3}$ des Grundbausteins 12 sind mit den entsprechenden Ausgängen des Registers 32 verbunden. Diese Ausgänge sind gleichzeitig Ausgänge $A_{c1,c2,c3}$ des Pipe-Line-Bausteins 30. Der Ausgang des Grundbausteins 12 führt einerseits auf den Ausgang $A_{ist}$ des Pipe-Line-Grundbausteins 30 als auch auf Eingänge eines n-bit-Vergleichers 33. Die Anzahl der Eingänge des n-bit-Vergleichers 33 entsprechen der Bitzahl der angelegten Signale. Weitere Eingänge des n-bit-Vergleichers sind mit der verzögerten Luminanzkomponente $e_{so}$ verbunden, die gleichzeitig Ausgangs-Luminanzkomponente $A_{so}$ des Pipe-Line-Grundbausteins 30 ist. Der n-bit-Vergleicher 33 liefert ein nichtinvertiertes Vergleichsergebnis $\overline{VA}$ und ein invertiertes Vergleichsergebnis $VA$ als Ausgangssignale des Pipe-Line-Grundbausteins 30.

Fig. 13 zeigt eine Schaltungsanordnung, die eine iterativen Lösung nach dem Wäge-Verfahren realisiert. Der Luminanz-Sollwert $Y_{soll}$ des ersten Rechenwerks (Fig. 9) wird dem Eingang $es_0$ eines ersten Pipe-Line-Grundbaustein 42 zugeführt. Die Luminanzkomponente $E_y$ und die Chrominanzkomponenten $E_{u2}$, $E_{v2}$, sowie die zusammengesetzte Chrominanzkomponente $E_{w2}$ werden den entsprechenden Eingängen $e_{y2}$, $e_{c1,c2,c3}$ des Pipe-Line-Grundbaustein 42 zugeführt. Der iterative Korrekturwert $\Delta$ wird zu Null gesetzt. Der nichtinvertierende Ausgang $\overline{VA}$ des n-bit-Vergleichers (33) wird mit dem $(n-1)$ ten Eingang $D_{n-1}$ des Registers 41 verbunden. Der invertierende Ausgang $VA$ des n-bit Vergleichers 33 wird mit den übrigen Eingängen $D_n$, $D_{n-2} \ldots D_0$ des n-bit-Registers 41 verbunden. Die Ausgänge $\Delta$ des Registers 41 liefern den iterativen Korrekturwert $\Delta$ (n-Bit-Wert) für einen nachfolgenden Pipe-Line-Grundbaustein 43, dessen Eingänge mit den Ausgängen des vorgeschalteten Pipe-Line-Grundbaustein 42 verbunden sind. Der invertiernde Ausgang $\overline{\Delta_n}$ des ersten Registers 41 ist mit dem Eingang $D_{n-2}$ eines nachfolgenden Registers 46, der nichtinvertierende Ausgang $\Delta_n$ des ersten Registers 41 ist mit dem Eingang $D_n$ des nachfolgenden Registers 46 verbunden. Die Luminanz- und Chrominanzeingänge der nachfolgenden Pipe-Line-Grundbausteine 44 … 45 sind jeweils mit den entsprechenden Ausgängen der vorhergeschalteten Pipe-Line-Grundbausteine verbunden. Vom zweiten Pipe-Line-Grundbaustein 43 an werden die Eingänge $D_{n-m}$ — wobei m, gezählt ab Register 46, Stufe des jeweiligen Registers ist — der Register 46 … 48 mit dem nichtinvertierenden Ausgang $VA$ des n-bit-Vergleichers 33 verbunden. Die folgenden Registereingänge $D_{n,n-1\ldots0}$ sind mit den vorhergehenden Registerausgängen $\overline{\Delta_n}$, $\Delta_{n,n-1\ldots n-m}$ wie folgt verbunden: der invertierte Ausgang $\overline{\Delta_n}$ ist mit den Eingängen $D_{n-1-m}$, die nichtinvertierten Ausgänge $\Delta_{n,n-1\ldots n-m}$ mit den Eingängen $D_{n,n-1\ldots n-m}$ verbunden.

Bei z. B. einer Genauigkeit von acht Stellen benötigt dieses iterative Verfahren acht Pipe-Line-Grundbausteine und acht Register. Die Genauigkeit des ermittelten iterativ ermittelten Korrekturwertes liegt bei diesem Verfahren, das in Echtzeit arbeitet, bei $\pm 1/2$ bit.

Nach dem vorstehend erläuterten erfindungsgemäßen Verfahren werden Luminanzdefekte, die durch Tiefpaßfilterung der Chrominanzsignale entstehen, durch ein breitbandiges Korrektursignal $\Delta E_y$, das dem

6

regulären Luminanzsignal $E_y$ überlagert wird, ausgeglichen. Das Korrektursignal $\Delta E_y$ wird auf der Senderseite gebildet und dem regulären Luminanzsignal $E_y$ zugesetzt. Der Grund hierfür ist, daß nur auf der Senderseite die notwendigen Signale zur Bildung des Korrektursignals $\Delta E_y$ vorhanden bzw. bekannt sind. Zur Erzeugung des Korrektursignals $\Delta E_y$ werden entsprechend Fig. 4 z. B. das Luminanzsignal $E_y$ sowie die nicht tiefpaßgefilterten und die tiefpaßgefilterten Farbdifferenzsignale benötigt. Im folgenden wird ein erfindungsgmäßes Anwendungsbeispiel auf dem Gebiet der Speicherung von Farbfernsehsignalen gegeben.

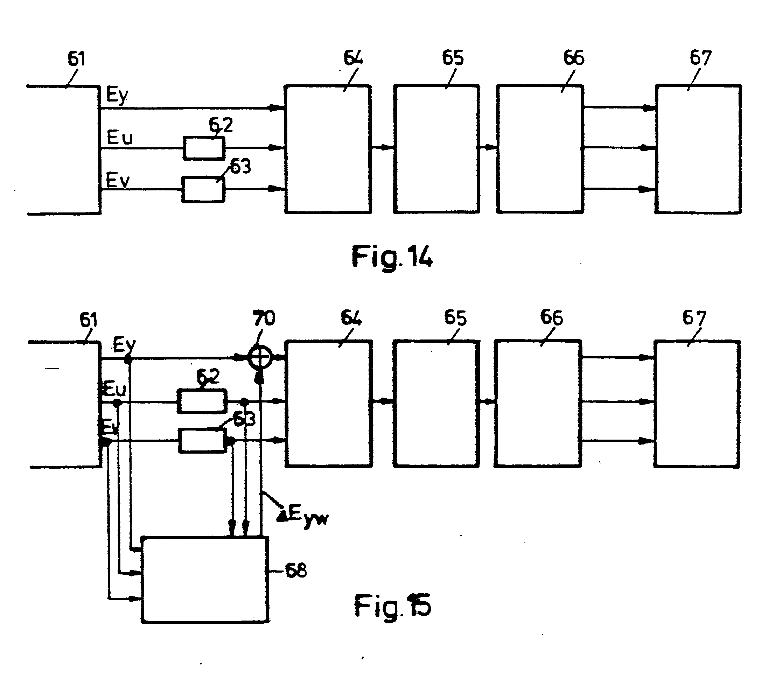

Fig. 14 zeigt ein bekanntes System zur Speicherung von Farbfernsehsignalen. Die übertragenen Farbfernsehsignale werden in einer Aufbereitungsschaltung 61 in ein Luminanzsignal $E_y$ und Chrominanzdifferenzsignale $E_u$, $E_v$ zerlegt. Die Chrominanzdifferenzsignale $E_u$, $E_v$ werden über Tiefpässe 62 bzw. 63 einer Aufnahmeschaltung 64 zugeführt, wo sie in geeigneter Form aufbereitet werden. Das Luminanzsignal $E_y$ wird ebenfalls der Aufnahmeschaltung 64 zugeführt. Das Ausgangssignal der Aufnahmeschaltung 64 wird auf einem Speichermedium 65, z. B. Magnetband oder Bildplatte, aufgezeichnet und bei Wiedergabe in einer nachfolgenden Wiedergabeschaltung 66 für die sich anschließende Weiterverarbeitungsstufe 67 aufgearbeitet.

Fig. 15 zeigt eine Verwirklichung der Erfindung bei einer Anordnung zur Speicherung von Farbfernsehsignalen, die zusätzlich zu den in Fig. 14 angegebenen Schaltungsteilen eine Schaltung 68 zur Gewinnung eines Korrektursignals $\Delta E_{yw}$ enthält. Zur Gewinnung des Korrektursignals $\Delta E_{yw}$ werden die Chrominanzsignale $E_u$, $E_v$ und das Luminanzsignal $E_y$ von der Aufbereitungsschaltung 61 sowie die Ausgangssignale der Tiefpässe 62, 63 der Schaltung 68 zugeführt. Das erzeugte Korrektursignal $\Delta E_{yw}$ wird in einer Additionsschaltung 70 zum Luminanzsignal $E_y$ addiert und das so gewonnene Signal der Aufnahmeschaltung 64 zugeführt.

Bei den bestehenden Farbfernsehsystemen wird die nichtlineare Übertragungskennlinie der Wiedergaberöhre bereits bei der Aufnahme kompensiert, hierbei handelt es sich um die sogenannte Gamma-Vorverzerrung. Aufgrund dieser Vorverzerrung werden in den Chrominanzdifferenzsignalen $E_u$, $E_v$ auch Luminanzinformationen übertragen.

Bei der Speicherung von Farbfernsehsignalen wird das Farbfernsehsignal zunächst in der Aufbereitungschaltung 61 in ein Luminanzsignal $E_y$ und zwei Chrominanzdifferenzsignale $E_u$, $E_v$ zerlegt. Da der menschliche Gesichtssinn für farbartmodulierte Strukturen wesentlich unempfindlicher ist als für leuchtdichtemodulierte Strukturen ist, werden zur Einsparung von Speicherplatz die Chrominanzdifferenzsignale $E_u$, $E_v$ tiefpaßgefiltert. Dies geschieht bei der Heimanwendung nach dem Empfang, also auf der Wiedergabeseite. Aufgrund der Tiefpaßfilterung 62, 63 der Chrominanzdifferenzsignale $E_u$, $E_v$ kommt es dann zu einer zusätzlichen Beeinflussung der Wiedergabeluminanz $E_y$. Diese Beeinflussung wird durch das Korrektursignal $\Delta E_{yw}$, das ausschließlich auf der Wiedergabeseite erzeugt wird, ausgeglichen. Das Korrektursignal $\Delta E_{yw}$ wird in der Korrekturschaltung 68 aus dem Luminanzsignal $E_y$, den tiefpaßgefilterten und den nicht tiefpaßgefilterten Chrominanzdifferenzsignalen $E_{uL}$, $E_{vL}$, $E_u$, $E_v$ gewonnen. Die Beeinflussung der Wiedergabeluminanz $E_y$ wird durch Addition des Korrektursignals $\Delta E_{yw}$ zur Wiedergabeluminanz $E_y$ kompensiert.

Für die Soll-Luminanz $Y_{soll}$ bei nicht tiefpaßgefilterten Chrominanzdifferenzsignalen $E_u$, $E_v$ gilt unter der Annahme der sogenannten Farbdifferenzsignale

$$E_u' = E_B - E_y \qquad E_v' = E_R - E_y \qquad E_w' = E_G - E_y$$

wobei sich die Signale $E_u'$, $E_v'$ und $E_w'$ durch die entsprechenden Beiwerte von den Signalen $E_u$, $E_v$ und $E_w$ unterscheiden :

$$Y_{soll} = a_R(E_v + E_y)^\gamma + a_G(E_w - E_y)^\gamma + a_B(E_u - E_y)^\gamma$$

Aufgrund der Tiefpaßfilterung liegen aber die gefilterten Chrominanzdifferenzsignale $E_{uL}$, $E_{vL}$ vor, daher gilt für die tatsächliche Luminanz :

$$Y_{ist} = a_R(E_{vL} + E_y)^\gamma + a_G(E_{wL} + E_y)^\gamma + a_B(E_{uL} + E_y)^\gamma$$

wobei die mit einem « L » versehenen Größen die tiefpaßgefilterten Chrominanzsignale darstellen sollen. Die Faktoren $a_R$, $a_G$ und $a_B$ stellen dabei die entsprechenden Beiwerte zur Bestimmung der Luminanz aus den Farbvalenzen der Wiedergaberöhre dar. Insbesondere an Chrominanzänderungsstellen sind diese beiden Luminanzen $Y_{ist}$, $Y_{soll}$ nicht gleich. Zur Korrektur des auftretenden Fehlers wird deshalb dem Luminanzsignal $E_y$ die Korrekturkomponente $\Delta E_{yw}$ hinzuaddiert. Damit ergibt sich für die Ist-Luminanz :

$$Y_{istkomp} = a_R(E_{vL} + E_y + \Delta E_{yw})^\gamma + a_G(E_{wL} + E_y + \Delta E_{yw})^\gamma + a_B(E_{uL} + E_y + \Delta E_{yw})^\gamma$$

Die Bestimmung der Kompensationskomponente kann

1.) Iterativ aus der Beziehung

$$Y_{istkomp} = Y_{soll}$$

bestimmt werden,
oder
    2.) durch eine Näherungslösung nach
2.1)

$$E_{yw\,s1} = (Y_{soll})^{1/\gamma} - (Y_{ist})^{1/\gamma}$$

2.2)

$$\Delta E_{yw\,s2} = \Delta E_{yw\,s1} + \frac{Y_{soll} - Y_{istkomp}(E_y + \Delta E_{yw\,s1})}{\gamma * (E_y + \Delta E_{yw\,s1})^{\gamma - 1}}$$

2.3)

$$\Delta E_{yw\,s3} = \Delta E_{yw\,s1} + \frac{2 * Y_{soll} - Y_{istkomp}(E_y + \Delta E_{yw\,s1})}{\gamma * \left\{ (E_y + E_{yw\,s1}) + (E_y + \Delta E_{yw\,s1})^{\gamma - 1} \right\}}$$

erfolgen.


## Patentansprüche

1. Farbfernsehübertragungssystem für Übertragung und Empfang von Luminanzsignalen und tiefpaßgefilterten Chrominanzsignalen, dadurch gekennzeichnet, daß zur Vermeidung von Luminanzdefekten bei der Wiedergabe vor der Übertragung über einen bandbegrenzten Kanal mittels einer Signalaufbereitungsschaltung (KE, 38, 68) allen drei Ansteuersignalen des zu übertragenden Luminanzsignals ($Y_{soll}$) ein aus Signalhöhenanteilen gewonnenes Korrektursignal ($\Delta E_y$; $\Delta E_{yw}$) zugesetzt wird, welches zum einen aus Eingangs- ($E_{R1}$, $E_{G1}$, $E_{B1}$) oder Ausgangssignalen ($E_{y1}$, $E'_{u1}$, $E'_{v1}$) einer Coder-Matrix (C) und tiefpaßgefilterten Chrominanzsignalen ($E'_{u1L}$, $E'_{v1L}$) oder zum anderen aus den vom Aufnahmesystem gelieferten Luminanz- ($E_y$; $E_{y1,y2}$) und Chrominanzsignalen ($E_{u1,v1,u2,v2}$; $E_{u,v,uL,vL}$) vor und nach einer Verarbeitungsstufe (35 ; 62, 63) erzeugt wird.

2. Farbfernsehübertragungssystem nach Anspruch 1, dadurch gekennzeichnet, daß das Gesamt-Luminanzsignal ($Y_{soll}$) der Formel

$$Y_{Soll} = a_B (E'_{U2L} + E_{Y2} + \Delta E_Y)^y + a_R (E'_{V2L} + E_{Y2} + \Delta E_Y)^y + a_G (E'_{W2L} + E_{Y2} + \Delta E_Y)^y$$

genügt.

3. Farbfernsehübertragungssystem nach Anspruch 1 und/oder Anspruch 2, dadurch gekennzeichnet, daß die Signalaufbereitungsschaltung (KE, 38, 68) ein Korrekturrechenwerk (38) ist, daß die vom Aufnahmesystem gelieferten Luminanz- ($E_Y$) und Chrominanzsignale ($E_{u,v}$) vor und nach einer Verarbeitungsstufe (35) digitalisiert (36, 37) dem Korrekturrechenwerk (38) zugeführt werden und daß das vom Rechenwerk (38) ermittelte Korrektursignal dem gesendeten Luminanzsignal aufaddiert (40) wird.

4. Farbfernsehübertragungssystem nach Anspruch 3, dadurch gekennzeichnet, daß das Rechenwerk (38) eine oder mehrere Grundbausteine (12, 51, 52, 56) enthält.

5. Farbfernsehübertragungssystem nach Anspruch 4, dadurch gekennzeichnet, daß im Grundbaustein (12, 51, 52, 56) das Luminanzsignal ($e_y$) mit je einer Chrominanzkomponente ($e_{c1}$, $e_{c2}$, $e_{c3}$) addiert (1, 2, 3) wird.

6. Farbfernsehübertragungssystem nach Anspruch 5, dadurch gekennzeichnet, daß jede Summe potenziert und gewichtet wird (4, 5, 6).

7. Farbfernsehübertragungssystem nach Anspruch 6, dadurch gekennzeichnet, daß diese potenzierten und gewichteten Summen addiert (7) werden.

8. Farbfernsehübertragungssystem nach Anspruch 3, dadurch gekennzeichnet, daß das Rechenwerk (38) eine oder mehrere Schaltungsanordnungen (Fig. 8, 49, 50) zur Erzeugung einer zusammengesetzten Chrominanz-Komponente (Ew, $e_{c3}$) enthält.

9. Farbfernsehübertragungssystem nach Anspruch 8, dadurch gekennzeichnet, daß aus den Chrominanzkomponenten ($e_{c1} = E_u$, $e_{c2} = E_v$) eine zusammengesetzte Chrominanzkomponente ($e_{c3} = E_w$) erzeugt wird (Fig. 8).

10. Farbfernsehübertragungssystem nach Anspruch 9, dadurch gekennzeichnet, daß zur Erzeugung der weiteren Chrominanzkomponente ($e_{c3}$) die Chrominanzkomponenten ($e_{c1}$, $e_{c2}$) verschieden gewichtet (8, 9) und addiert (10) werden.

11. Farbfernsehübertragungssystem nach einem oder mehreren der vorangehenden Ansprüche 3 bis 10, dadurch gekennzeichnet, daß die Luminanzkomponente ($E_y$) mit den beiden Chrominanzkomponenten ($E_{u1}$, $E_{v1}$), die vor der Verarbeitungsstufe abgezweigt werden und einer daraus zusammengesetzten Chrominanzkomponente ($E_{w1}$) einem ersten Grundbaustein (52) zugeführt wird, dessen Ausgangssignal ein Luminanz-Sollwert ($y_{soll}$) darstellt.

12. Farbfernsehübertragungssystem nach Anspruch 11, dadurch gekennzeichnet, daß die Luminanz-komponente ($E_y$) mit den beiden Chrominanzkomponenten ($E_{u2}$, $E_{v2}$), die nach der Verarbeitungsstufe abgezweigt werden und einer daraus zusammengesetzten Chrominanzkomponente ($E_{w2}$) einem zweiten Grundbaustein (51) zugeführt wird, dessen Ausgangssignal einen Luminanz-Istwert ($y_{ist}$) darstellt.

13. Farbfernsehübertragungssystem nach Anspruch 12, dadurch gekennzeichnet, daß die Ausgangssignale der beiden Grundbausteine (51, 52) potenziert, gewichtet (53, 54) und einer Additionsstufe (55) zugeführt werden, dessen Ausgangssignal ($\Delta E_{ys}$) das Ausgangssignal eines ersten Rechenwerkes (34) ist (Fig. 9).

14. Farbfernsehübertragungssystem nach Anspruch 13, dadurch gekennzeichnet, daß eine korrigier-te Luminanzkomponente ($E_y + \Delta E_{ys}$), die aus der Summe des Ausgangssignals ($\Delta E_{ys}$) des ersten Rechenwerks (34) und der Luminanz-Komponente ($E_y$) besteht, einem dritten Grundbaustein (56) zugeführt wird, daß die Chrominanzkomponenten ($E_{u2}$, $E_{v2}$), die nach der Verarbeitungsstufe (35) abgezweigt sind, und die daraus zusammengesetzte Chrominanzkomponente ($E_{w2}$) dem dritten Grundbaustein (56) zugeführt wird, und daß Ausgangssignal ($y(\Delta E_{ys})$) des dritten Grundbausteins (56) negiert (18, — $y(\Delta E_{ys})$) wird.

15. Farbfernsehübertragungssystem nach Anspruch 14, dadurch gekennzeichnet, daß das Ausgangssignal des ersten Grundbausteins (52) mit dem negierten Ausgangssignal ($- (\Delta E_{ys})$) des dritten Grundbausteins (56) addiert (19) und mit der potenzierten und gewichteten (17), korrigierten Luminanz-komponente ($E_y + \Delta E_{ys}$) des ersten Rechenwerks (34) multipliziert (20) wird, daß das Ausgangssignal des Multiplizierers (20) und das Ausgangssignal ($\Delta E_{ys}$) des ersten Rechenwerks (34) einem Addierer (21) zugeführt wird, dessen Aussgangssignal das Korrektursignal ($\Delta E_{y1}$) eines zweiten Rechenwerks (Fig. 10) darstellt.

16. Farbfernsehübertragungssystem nach Anspruch 14, dadurch gekennzeichnet, daß die korrigierte Luminanzkomponente ($E_y \Delta E_{ys}$) des ersten Rechenwerks (34) potenziert und gewichtet (23) mit sich selbst addiert (26) wird, daß die Summe gewichtet (27) wird und mit der Summe (25) des gewichteten Ausgangssignals ($y(\Delta E_{ys})$) des dritten Grundbausteins (56) und des Luminanz-Sollwertes ($Y_{soll}$) einem Divisor (28) zugeführt werden, dessen Ausgangssignal (e1/e2) addiert (29) mit dem Ausgangssignal ($\Delta E_{ys}$) des ersten Rechenwerks (34) ein Korrektursignal ($\Delta E_{y2}$) eines dritten Rechenwerks (Fig. 11) ergibt.

17. Farbfernsehübertragungssystem nach einem oder mehreren der Ansprüche 3 bis 16, dadurch gekennzeichnet, daß ein Pipe-Line-Grundbaustein (30) ein Register (32), einen n-bit Vergleicher (33), einen Grundbaustein (12) und einen Addierer (31) enthält (Fig. 12).

18. Farbfernsehübertragungssystem nach Anspruch 17, dadurch gekennzeichnet, daß dem Register (32) die Luminanzkomponente ($e_{y2}$), die Chrominanzkomponenten ($e_{c1,2}$), die zusammengesetzte Chrominanzkomponente ($e_{c3}$), eine Luminanzkomponente ($e_{so}$) einer vorherigen Verarbeitungsstufe (12) und ein Takt (T) zugeführt wird.

19. Farbfernsehübertragungssystem nach Anspruch 18, dadurch gekennzeichnet, daß ein Ausgangssignal ($A_{y2}$), das der Luminanzkomponente ($e_{y2}$) des Registers (32) entspricht, zum einen Ausgangssignal ($A_{y2}$) der Luminanzkomponente des Pipe-Line-Grundbaustein (30) ist, zum anderen mit einem aus der vorherigen Stufe ermittelten iterativen Korrekturwert ($\Delta$) zu einer iterativ korrigierten Luminanzkomponente ($e_{yA}$) addiert (31) wird.

20. Farbfernsehübertragungssystem nach Anspruch 18 oder 19, dadurch gekennzeichnet, daß die Ausgangssignale ($A_{c1,c2,c3}$) des Pipe-Line(Grundbausteines (30), die den Chrominanzkomponenten ($e_{c1,c2}$) und der zusammengesetzten Chrominanzkomponente ($e_{c3}$) entsprechen, mit der iterativ korrigierten Luminanzkomponente ($e_{yA}$) einem Grundbaustein (12) zugeführt werden, dessen Ausgangssignal einen iterativen Luminanz-Ist-Wert ($A_{ist}$) darstellt.

21. Farbfernsehübertragungssystem nach Anspruch 20, dadurch gekennzeichnet, daß das Ausgangs-signal ($A_{so}$) des Registers (32), das dem Luminanz-Sollwert ($e_{so}$) entspricht, zum einen Ausgangssignal ($A_{so}$) des Pipe-Line-Grundbausteins (30) ist, zum anderen zusammen mit dem iterativen Luminanz-Ist-Wert ($A_{ist}$) einem n-bit-Vergleicher (33) zugeführt wird.

22. Farbfernsehübertragungssystem nach Anspruch 21, dadurch gekennzeichnet, daß der n-bit Vergleicher (33) zwei zueinander invertierte ein-bit-Logik-Ausgänge (VA, $\overline{VA}$) besitzt.

23. Farbfernsehübertragungssystem nach Anspruch 11 und 22, dadurch gekennzeichnet, daß ein viertes Rechenwerk (Fig. 13) folgenden Aufbau hat :

der Luminanz-Sollwert ($y_{soll}$) wird dem Eingang eines ersten Pipe-Line-Grundbausteins (42) zugeführt,

die Luminanzkomponente ($E_y$) und die Chrominanzkomponenten ($E_{u2}$, $E_{v2}$) sowie die zusammenge-setzte Chrominanzkomponente ($E_{w2}$) werden den entsprechenden Eingängen des Pipe-Line-Grundbausteins (42) zugeführt,

der iterative Korrekturwert (Δ) wird zu Null gesetzt, der nichtinvertierende Ausgang (VA) des n-bit-Vergleichers (33) wird mit dem (n — 1) ten Eingang ($D_{n-1}$) des Registers (41) verbunden,

der invertierende Ausgang ($\overline{VA}$) des n-bit Vergleichers (33) wird mit den übrigen Eingängen ($D_n$, $D_{n-2}...D_0$) des n-bit Registers (41) verbunden,

ein Ausgang (Δ) des Registers (41) liefert einen iterativen Korrekturwert (Δ) für einen nachfolgenden Pipe-Line-Grundbaustein (43), dessen Eingänge ($e_{y2}$, $e_{c1, c2, c3, so}$) mit den Ausgängen des vorgeschalteten Pipe-Line-Grundbausteins (42) verbunden sind,

die Ausgänge des ersten Registers (41) sind mit den Eingängen eines nachfolgenden Registers (46) verbunden, und es sind soviele Stufen vorhanden, wie es die Genauigkeit des iterativen Korrekturwertes (Δ) erfordert.

24. Farbfernsehübertragungssystem nach einem oder mehreren der Ansprüche 1 bis 23, dadurch gekennzeichnet, daß die Übertragung auf ein Speichermedium erfolgt.

## Claims

1. A colour television transmission system for transmitting and receiving luminance signals and low-pass filtered chrominance signals, characterised in that, in order to avoid luminance defects during the reproduction, before the transmission over a band-limited channel, a correction signal ($\Delta E_y$ ; $\Delta E_{yw}$), which is obtained from signal height components and which is produced on the one hand from input signals ($E_{R1}$, $E_{G1}$, $E_{B1}$) or output signals ($E_{y1}$, $E'_{U1}$, $E'_{V1}$) of a coder matrix (C) and low-pass filtered chrominance signals ($E'_{U1L}$, $E'_{V1L}$) or on the other hand from the luminance signals ($E_y$ ; $E_{y1, y2}$) and chrominance signals ($E_{u1, v1, u2, v2}$ ; $E_{u, v, uL, vL}$) delivered by the camera system before and after a processing stage (35 ; 62, 63), is added, by means of a signal processing circuit (KE, 38, 68), to all three control signals of the luminance signal ($Y_{soll}$) to be transmitted.

2. A colour television transmission system according to Claim 1, characterised in that the total luminance signal ($Y_{soll}$) satisfies the formula

$$Y_{Soll} = a_B (E'_{U2L} + E_{Y2} + \Delta E_Y)^y + a_R (E'_{V2L} + E_{Y2} + \Delta E_Y)^y + a_G (E'_{W2L} + E_{Y2} + \Delta E_Y)^y$$

3. A colour television transmission system according to Claim 1 and/or Claim 2, characterised in that the signal processing circuit (KE, 38, 68) is a corrective arithmetic unit (38), that the luminance signal ($E_Y$) and chrominance signals ($E_{u, v}$) delivered by the camera system are digitalized before and after a processing stage (35) and supplied to the corrective arithmetic unit (38) and that the correction signal determined by the arithmetic unit (38) is added (40) to the luminance signal transmitted.

4. A colour television transmission system according to Claim 3, characterised in that the arithmetic unit (38) contains one or more basic modules (12, 51, 52, 56).

5. A colour television transmission system according to claim 4, characterised in that, in the basic module (12, 51, 52, 56), the luminance signal ($e_y$) is added (1, 2, 3) to each of three chrominance components ($e_{c1}$, $e_{c2}$, $e_{c3}$).

6. A colour television transmission system according to Claim 5, characterised in that each sum is raised to a higher power and weighted (4, 5, 6).

7. Colour television transmission system according to Claim 6, characterised in that these sums raised to a higher power and weighted are added (7).

8. A colour television transmission system according to Claim 3, characterised in that the arithmetic unit (38) comprises one or more circuit arrangements (Figure 8, 49, 50) for producing a composite chrominance component ($E_w$, $e_{c3}$).

9. A colour television transmission system according to Claim 8, characterised in that a composite chrominance component ($e_{c3} = E_w$) is produced from the chrominance components ($e_{c1} = E_u$, $e_{c2} = E_v$) (Figure 8).

10. A colour television transmission system according to Claim 9, characterised in that, in order to produce the further chrominance component ($e_{c3}$), the chrominance components ($e_{c1}$, $e_{c2}$) are differently weighted (8, 9) and added (10).

11. A colour television transmission system according to any one or more of the preceding Claims 3 to 10, characterised in that the luminance component ($E_y$) together with the two chrominance components ($E_{u1}$, $E_{v1}$) which were branched off before the processing stage, and a chrominance component ($E_{w1}$) composed therefrom, is supplied to a first basic module (52), the output signal of which represents a desired luminance value ($y_{soll}$).

12. A colour television transmission system according to Claim 11, characterised in that the luminance component ($E_y$), together with the two chrominance components ($E_{u2}$, $E_{v2}$) which were branched off after the processing stage and a chrominance component ($E_{w2}$) composed therefrom, is supplied to a second basic module (51), the output signal of which represents an actual luminance value

($y_{ist}$).

13. A colour television transmission system according to Claim 12, characterised in that the output signals of the two basic modules (51, 52) are raised to a higher power, weighted (53, 54) and supplied to an addition stage (55), the output signal ($\Delta E_{ys}$) of which is the output signal of a first arithmetic unit (34) (Figure 9).

14. A colour television transmission system according to Claim 13, characterised in that a corrected luminance component ($E_y + \Delta E_{ys}$), which consists of the sum of the output signal ($\Delta E_{ys}$) of the first arithmetic unit (34) and the luminance component ($E_y$), is supplied to a third basic module (56), that the chrominance components ($E_{u2}$, $E_{v2}$) which are branched off after the processing stage (35), and the chrominance component ($E_{w2}$) composed therefrom are supplied to the third basic module (56), and that the output signal ($y(\Delta E_{ys})$) of the third basic module (56) is negated (18, $- y(\Delta E_{ys})$).

15. A colour television transmission system according to Claim 14, characterised in that the output signal of the first basic module (52) is added (19) to the negated output signal ($- y(\Delta E_{ys})$) of the third basic module (56) and multiplied (20) by the corrected luminance component ($E_y + \Delta E_{ys}$) of the first arithmetic unit (34), which has been raised to a higher power and weighted (17), that the output signal of the multiplier (20) and the output signal ($\Delta E_{ys}$) of the first arithmetic unit (34) are supplied to an adder (21), the output signal of which represents the correction signal ($\Delta E_{y1}$) of a second arithmetic unit (Figure 10).

16. A colour television transmission system according to Claim 14, characterised in that the corrected luminance component ($E_y + \Delta E_{ys}$) of the first arithmetic unit (34), raised to a higher power and weighted (23), is added to itself (26), that the sum is weighted (27) and supplied, together with the sum (25) of the weighted output signal ($y(\Delta E_{ys})$) of the third basic module (56) and of the desired luminance value ($Y_{soll}$), to a divider (28), of which the output signal (e1/e2) added (29) to the output signal ($\Delta E_{ys}$) of the first arithmetic unit (34) forms a correction signal ($\Delta E_{y2}$) of a third arithmetic unit (Figure 11).

17. A colour television transmission system according to any one or more of Claims 3 to 16, characterised in that a pipeline basic module (30) comprises a register (32), an n-bit comparator (33), a basic module (12) and an adder (31) (Figure 12).

18. A colour television transmission system according to Claim 17, characterised in that the luminance component ($e_{y2}$), the chrominance components ($e_{c1, 2}$), the composite chrominance component ($e_{c3}$), a luminance component ($e_{so}$) from a previous processing stage (12) and a clock pulse (T) are supplied to the register (32).

19. A colour television transmission system according to Claim 18, characterised in that an output signal ($A_{y2}$), which corresponds to the luminance component ($e_{y2}$) of the register (32), on the one hand is an output signal ($A_{y2}$) of the luminance component of the pipeline basic module (30), and on the other hand is added to an iterative correction value ($\Delta$) determined from the preceding stage to form an iteratively corrected luminance component ($e_{yA}$).

20. A colour television transmission system according to Claim 18 or 19, characterised in that the output signals ($A_{c1, c2, c3}$) of the pipeline basic module (30), which correspond to the chrominance components ($e_{c1, c2}$) and the composite chrominance component ($e_{c3}$), are supplied together with the iteratively corrected luminance component ($e_{yA}$) to a basic module (12), the output signal of which represents an iterative actual luminance value ($A_{ist}$).

21. A colour television transmission system according to Claim 20, characterised in that the output signal ($A_{so}$) of the register (32), which corresponds to the desired luminance value ($e_{so}$), on the one hand is an output signal ($A_{so}$) of the pipeline basic module (30) and on the other hand is supplied, together with the iterative actual luminance value ($A_{ist}$), to an n-bit comparator (33).

22. A colour television transmission system according to Claim 21, characterised in that the n-bit comparator has two one-bit logic outputs (VA, $\overline{VA}$) which are inverted in relation to one another.

23. A colour television transmission system according to Claims 11 and 22, characterised in that a fourth arithmetic unit (Figure 13) has the following construction :

the desired luminance value ($y_{soll}$) is supplied to the input of a first pipeline basic module (42),

the luminance component ($E_y$) and the chrominance components ($E_{u2}$, $E_{v2}$) as well as the composite chrominance component ($E_{w2}$) are supplied to the corresponding inputs of the pipeline basic module (42),

the iterative correction value ($\Delta$) is set to zero,

the non-inverting output (VA) of the n-bit comparator (33) is connected to the (n — 1)th input ($D_{n-1}$) of the register (41),

the inverting output ($\overline{VA}$) of the n-bit comparator (33) is connected to the other inputs ($D_n$, $D_{n-2}...D_0$) of the n-bit register (41),

an output ($\Delta$) of the register (41) delivers an iterative correction value ($\Delta$) for a following pipeline basic module (43), the inputs ($e_{y2}$, $e_{c1, c2, c3, so}$) of which are connected to the outputs of the preceding pipeline basic module (42),

the outputs of the first register (41) are connected to the inputs of a following register (46),

and there are as many stages present as the accuracy of the iterative corrective value ($\Delta$) requires.

24. A colour television transmission system according to any one or more of Claims 1 to 23, characterised in that the transmission is effected on a storage medium.

## Revendications

1. Système de transmission de télévision en couleurs permettant la transmission et la réception de signaux de luminance et de signaux de chrominance ayant subi un filtrage passe-bas, caractérisé en ce qu'en vue d'éviter des défauts de luminance lors de la reproduction, il est prévu, avant la transmission, par l'intermédiaire d'un canal à limitation de bande et au moyen d'un circuit de mise en forme de signaux (KE, 38, 68), d'ajouter à chacun des trois signaux de commande du signal de luminance ($Y_{consigne}$), à transmettre, un signal de correction ($\Delta E_y$ ; $\Delta E_{yw}$), provenant de parties hautes des signaux, qui est élaboré, d'une part, à partir de signaux d'entrée ($E_{R1}$, $E_{G1}$, $E_{B1}$) ou de signaux de sortie ($E_{y1}$, $E'_{U1}$, $E'_{V1}$) d'une matrice de codage (C) et de signaux de chrominance ($E'_{U1L}$, $E'_{V1L}$) ayant subi un filtrage passe-bas ou, d'autre part, à partir des signaux de luminance ($E_y$ ; $E_{y1, y2}$) et des signaux de chrominance ($E_{u1, v1, u2, v2}$ ; $E_{u, v, uL, vL}$) se présentant avant et après un étage de traitement (35 ; 62, 63), qui sont délivrés par le dispositif de prise de vue.

2. Système de transmission de télévision en couleurs suivant la revendication 1, caractérisé en ce que le signal global de luminance ($Y_{consigne}$) satisfait à la formule :

$$Y_{consigne} = a_B(E'_{U2L} + E_{Y2} + \Delta E_Y)^y + a_R(E'_{V2L} + E_{Y2} + \Delta E_Y)^y + a_G(E'_{W2L} + E_{Y2} + \Delta E_Y)^y$$

3. Système de transmission de télévision en couleurs suivant la revendication 1 et/ou la revendication 2, caractérisé en ce que le circuit de mise en forme de signaux (KE, 38, 68) est un bloc arithmétique de correction (38), en ce que les signaux de luminance ($E_y$) et de chrominance ($E_{u, v}$) se présentant avant et après un étage de traitement (35), qui sont délivrés par le dispositif de prise de vue, sont envoyés à ce bloc arithmétique de correction (38) après avoir été numérisés (36, 37) et en ce que le signal de correction élaboré par le bloc arithmétique (38) est ajouté (40) au signal transmis de luminance.

4. Système de transmission de télévision en couleurs suivant la revendication 3, caractérisé en ce que le bloc arithmétique (38) contient un ou plusieurs modules de base (12, 51, 52, 56).

5. Système de transmission de télévision en couleurs suivant la revendication 4, caractérisé en ce que, dans chaque module de base (12, 51, 52, 56), le signal de luminance ($e_y$) est ajouté (1, 2, 3) à chaque fois à une composante de chrominance ($e_{c1}$, $e_{c2}$, $e_{c3}$).

6. Système de transmission de télévision en couleurs suivant la revendication 5, caractérisé en ce que chaque somme est élevée à une puissance et pondérée (4, 5, 6).

7. Système de transmission de télévision en couleurs suivant la revendication 6, caractérisé en ce que ces sommes élevées à une puissance et pondérées sont ajoutées (7).

8. Système de transmission de télévision en couleurs suivant la revendication 3, caractérisé en ce que le bloc arithmétique (38) contient un ou plusieurs circuits (figure 8, 49, 50) permettant d'élaborer une composante combinée de chrominance ($E_w$, $e_{c3}$).

9. Système de transmission de télévision en couleurs suivant la revendication 8, caractérisé en ce qu'une composante combinée de chrominance ($E_{C3} = E_w$) est élaborée (figure 8) à partir des composantes de chrominance ($e_{c1} = e_u$, $e_{c2} = e_v$).

10. Système de transmission de télévision en couleurs suivant la revendication 9, caractérisé en ce que, en vue d'élaborer la composante combinée de chrominance ($e_{c3}$), on pondère différemment (8, 9) les composantes de chrominance ($e_{c1}$, $e_{c2}$) et on les ajoute (10).

11. Système de transmission de télévision en couleurs suivant ou plusieurs des revendications 1 à 10 précédentes, caractérisé en ce que les composantes de luminance ($E_y$) sont envoyées, avec les deux composantes de chrominance ($E_{u1}$, $E_{v1}$) qui sont prélevées avant l'étage de traitement et avec une composante de chrominance ($E_{w1}$) obtenue par combinaison à partir de celles-ci, à un premier module de base (52) dont le signal de sortie constitue une valeur de consigne de luminance ($Y_{consigne}$).

12. Système de transmission de télévision en couleurs suivant la revendication 11, caractérisé en ce que la composante de luminance ($E_y$) est envoyée, avec les deux composantes de chrominance ($E_{u2}$, $E_{v2}$) qui sont prélevées après l'étage de traitement et avec une composante de chrominance ($E_{w2}$) combinée à partir de celles-ci, à un deuxième module de base (51) dont le signal de sortie constitue une valeur réelle de luminance ($Y_{réel}$).

13. Système de transmission de télévision en couleurs suivant la revendication 12, caractérisé en ce que les signaux de sortie des deux modules de base (51, 52) sont élevés à une puissance, pondérés (53, 54) et envoyés à un étage additionneur (55) dont le signal de sortie $\Delta E_{ys}$ constitue le signal de sortie d'un premier bloc arithmétique (34) (Figure 9).

14. Système de transmission de télévision en couleurs suivant la revendication 13, caractérisé en ce qu'une composante corrigée de luminance ($E_y + \Delta E_{ys}$), qui est formée de la somme du signal de sortie ($\Delta E_{ys}$), du premier bloc arithmétique (34) et de la composante de luminance ($E_y$), est envoyée à un troisième bloc de base (56), en ce que les composantes de chrominance ($E_{u2}$, $E_{v2}$) qui sont prélevées après l'étage de traitement (35) et la composante de chrominance ($E_{w2}$) combinée à partir de celles-ci sont envoyées à ce troisième module de base (56) et en ce que le signal de sortie ($y(\Delta E_{ys})$) de ce troisième module de base (56) est rendu négatif (18, $-y(\Delta E_{ys})$).

15. Système de transmission de télévision en couleurs suivant la revendication 14, caractérisé en ce que le signal de sortie du premier module de base (52) est ajouté (19) au signal de sortie rendu négatif ($-$ y($\Delta E_{ys}$)) du troisième module de base (56) et est multiplié (20) par la composante corrigée de luminance ($E_y + \Delta E_{ys}$) du premier bloc arithmétique (34) qui a été élevée à une puissance et pondérée (17), et en ce que le signal de sortie de ce multiplicateur (20) et le signal de sortie ($\Delta E_{ys}$) du premier bloc arithmétique (34) sont envoyés à un additionneur (21) dont le signal de sortie constitue le signal de correction ($\Delta E_{y1}$) d'un second bloc arithmétique (figure 10).

16. Système de transmission de télévision en couleurs suivant la revendication 14, caractérisé en ce que la composante corrigée de luminance ($E_y + \Delta E_{ys}$) du premier bloc arithmétique (34) est ajoutée (26) à elle-même après avoir été élevée à une puissance et pondérée (23) et en ce que la somme est pondérée (27) et est envoyée, avec la somme (25) du signal pondéré de sortie (y($\Delta E_{ys}$)) du troisième module de base (56) et de la valeur de consigne de luminance ($Y_{consigne}$), à un diviseur (28) dont le signal de sortie (e1/e2), après avoir été ajouté (29) au signal de sortie ($\Delta E_{ys}$) du premier bloc arithmétique (34), donne un signal de correction ($\Delta E_{y2}$) d'un troisième bloc arithmétique (figure 11).

17. Système de transmission de télévision en couleurs suivant une ou plusieurs des revendications 3 à 16, caractérisé en ce qu'un module de base-pipeline (30) contient un registre (32), un comparateur à n-bits (33), un module de base (12) et un additionneur (31) (figure 12).

18. Système de transmission de télévision en couleurs suivant la revendication 17, caractérisé en ce que la composante de luminance ($e_{y2}$), les composantes de chrominance ($e_{c1, 2}$), la composante combinée de chrominance ($e_{c3}$), une composante de luminance ($e_{so}$) d'un étage précédent de traitement (12) et une impulsion d'horloge (T) sont envoyées au registre (32).

19. Système de transmission de télévision en couleurs suivant la revendication 18, caractérisé en ce qu'un signal de sortie ($A_{y2}$), qui correspond à la composante de luminance ($e_{y2}$) du registre (32), constitue un signal de sortie ($A_{y2}$) de la composante de luminance du module de base-pipeline (30), en étant par ailleurs ajouté (31) à une valeur de correction itérative ($\Delta$) élaborée à partir de l'étage précédent, de façon à donner une composante corrigée itérative de luminance ($e_{yA}$).

20. Système de transmission de télévision en couleurs suivant la revendication 18 ou 19, caractérisé en ce que les signaux de sortie ($A_{c1, c2, c3}$) du module de base-pipeline (30), qui correspondent aux composantes de chrominance ($e_{c1, c2}$) et la composante combinée de chrominance ($e_{c3}$), sont envoyés, avec la composante corrigée itérative de luminance ($e_{yA}$), à un module de base (12) dont le signal de sortie constitue une valeur réelle itérative de luminance ($A_{réel}$).

21. Système de transmission de télévision en couleurs suivant la revendication 20, caractérisé en ce que le signal de sortie ($A_{so}$) du registre (32) qui correspond à la valeur de consigne de luminance ($e_{so}$) constitue d'une part le signal de sortie ($A_{so}$) du module de base-pipeline (30) et est, d'autre part, envoyé à un comparateur à n-bits (33) en même temps que la valeur réelle itérative de luminance ($A_{réel}$).

22. Système de transmission de télévision en couleurs suivant la revendication 21, caractérisé en ce que le comparateur à n-bits (33) possède deux sorties logiques à un seul bit (VA, $\overline{VA}$) qui sont inversées l'une par rapport à l'autre.

23. Système de transmission de télévision en couleurs suivant les revendication 21 et 22, caractérisé en ce qu'un quatrième bloc arithmétique (figure 13) a la structure suivante : la valeur de consigne de luminance ($Y_{consigne}$) est envoyée à l'entrée d'un premier module de base-conduit (42), la composante de luminance ($E_y$) et les composantes de chrominance ($E_{u2}, E_{v2}$), ainsi que la composante combinée de chrominance ($E_{w2}$) sont envoyées aux entrées associées de ce module de base-pipeline (42), la valeur de correction itérative ($\Delta$) est mise à zéro, la sortie non inversée (VA) du comparateur à n-bits (33) est reliée à la (n — 1)ième entrée ($D_{n-1}$) du registre (41), la sortie inversée (VA) de ce comparateur à n-bits (33) est reliée aux autres entrées ($D_n, D_{n-2}...D_0$) du registre à n-bits (41), une sortie ($\Delta$) de ce registre (41) délivre une valeur de correction itérative ($\Delta$) destinée à un module de base-pipeline (43) suivant dont des entrées ($e_{y2}, e_{c1, c2, c3, so}$) sont reliées aux sorties du module de base-conduit (42) connecté en amont, les sorties du premier registre (41) sont reliées aux entrées d'un registre (46) suivant et il est prévu autant d'étages que l'exige la précision de la valeur de correction itérative ($\Delta$).

24. Système de transmission de télévision en couleurs suivant une ou plusieurs des revendications 1 à 23, caractérisé en ce que la transmission s'effectue sur un support d'enregistrement.

$$[A] = [W]^{-1} \wedge [D] = [C]^{-1}$$

$$\Longrightarrow \left(\begin{array}{c} X_1 \\ Y_1 \\ Z_1 \end{array}\right) = \vec{F}_1 = \vec{F}_2 = \left(\begin{array}{c} X_2 \\ Y_2 \\ Z_2 \end{array}\right)$$

Fig.1

Fig.2

Fig.3a

Fig.3b

Fig.4a

Fig.4b

Fig.5

Fig.6

Fig.8

Fig.7

Fig.12

Fig.9

Fig.10

EP 0 176 093 B1

Fig.11

Fig.13

EP 0 176 093 B1

Fig. 14

Fig. 15